# EUROPÄISCHE PATENTSCHRIFT

(11) **EP 3 348 980 B1**
(45) Veröffentlichungstag und Bekanntmachung des Hinweises auf die Patenterteilung: **04.12.2019**
(21) Anmeldenummer: 18150998.5
(22) Anmeldetag: 10.01.2018
(51) Int. Cl.: G01L 1/22, G01L 1/14, G01L 1/18, G01L 1/26

(54) **MEHRSCHICHTIGER, TAKTILER SENSOR MIT BEFESTIGUNGSMITTEL**
MULTILAYER TACTILE SENSOR COMPRISING FIXING MEANS
CAPTEUR TACTILE MULTICOUCHE POURVU DE MOYEN DE FIXATION

(30) Priorität: 17.01.2017 DE 102017100791
(43) Veröffentlichungstag der Anmeldung: 18.07.2018
(73) Patentinhaber: Pilz GmbH & Co. KG, 73760 Ostfildern (DE)
(72) Erfinder: Ibrocevic, Onedin, 73760 Ostfildern (DE); Schweiker, Matthias, 73760 Ostfildern (DE); Neuschwander, Bernd, 73760 Ostfildern (DE); Kuczera, Matthias, 73760 Ostfildern (DE)
(74) Vertreter: Witte, Weller & Partner Patentanwälte mbB

(56) Entgegenhaltungen:
- GB-A- 2 443 208
- US-A1- 2002 134 116

## Beschreibung

Die vorliegende Erfindung betrifft einen mehrschichtigen, taktilen Sensor sowie ein entsprechendes Herstellungsverfahren für einen solchen.

Gattungsgemäße mehrschichtige, taktile Sensoren sind aus der Praxis beispielsweise als sog. Schaltmatten bekannt. Schaltmatten sind zweidimensionale Sensoren mit einer druckempfindlichen Oberfläche, die auf eine mechanische Belastung reagieren. Betritt beispielsweise eine Person die aktive Oberfläche, wird die dabei entstehende mechanische Belastung erkannt und durch eine an dem Sensor angeschlossene Steuereinheit ausgewertet und in eine entsprechende Reaktion umgesetzt. Eine Reaktion auf dieses Ereignis könnte beispielsweise das Abschalten einer technischen Anlage sein oder das Anzeigen einer Warnmeldung.

Bekannte Schaltmatten beruhen dabei im Allgemeinen auf dem Prinzip, dass zwei mit leitfähigen Elektroden bestückte Schichten durch eine drucksensitive Zwischenschicht getrennt sind und sich eine elektrische Eigenschaft zwischen den Elektroden ändert, sobald die Zwischenschicht komprimiert wird. Die Zwischenschicht kann hierfür komprimierbare Elemente aufweisen, sodass bei einem Druck, der quer zur Fläche der Schaltmatte gerichtet ist, die beiden Elektroden aufeinandergedrückt werden und es zwischen den komprimierbaren Elementen zum unmittelbaren Kontakt zwischen den Elektroden kommt.

Alternativ kann die Zwischenschicht auch aus einem Material gefertigt sein, welches unter Druck seinen elektrischen Widerstand ändert. Solch eine Zwischenschicht kann dann vollflächig ausgestaltet sein, sodass auch dann, wenn die beiden Elektroden nicht in unmittelbaren Kontakt miteinander geraten, mittels einer entsprechenden Auswerteschaltung diese Widerstandsänderung erfasst werden kann.

Ausgehend von den vorgenannten Grundprinzipien ist es üblicherweise ein Ziel, einen möglichst großen Sensor in einem Stück zu produzieren. Hierzu werden die einzelnen Schichten zunächst separat erstellt und in einem weiteren Arbeitsschritt zum eigentlichen Sensor zusammengefügt. Bevorzugt können dabei neben einer vollflächigen Zwischenschicht auch die Elektroden als Flächengebilde ausgestaltet sein, beispielsweise als textile Flächengebilde mit eingenähten oder eingewobenen Elektroden. Der Sensor wird dann gebildet, indem die Schichten übereinandergelegt und fixiert werden. Dies erfolgt üblicherweise, indem die Schichten in ein Gehäuse eingelegt werden oder zu einem Verbund laminiert werden. Beides geht üblicherweise zu Lasten der Flexibilität, insbesondere der Biegsamkeit des Sensors.

Während die Einbußen in der Flexibilität bei der Anwendung als Sensormatte zunächst unerheblich sind, ist es für andere Anwendungsfälle wünschenswert, die ursprüngliche Flexibilität der einzelnen Schichten beizubehalten. Solche Anwendungsfälle sind beispielsweise die Verwendung des taktilen Sensors als sog. Roboterhaut, bei der die aktive Oberfläche des Sensors der äußerlichen Kontur eines Roboters angepasst wird oder aber bei der Verwendung als Einklemmschutz an Quetsch- und Scherkanten mit einem taktilen Sensor, der streifenförmig ausgebildet ist und sich entlang der zu überwachenden Kante erstreckt. In beiden Fällen soll die ursprüngliche Flexibilität der einzelnen Schichten möglichst beibehalten werden.

Weitere Sensoren sind aus US 2002/0134116 A1 und GB 2443208 A bekannt.

Vor diesem Hintergrund ist es eine Aufgabe der vorliegenden Erfindung, einen mehrschichtigen, taktilen Sensor anzugeben, der die vorstehend genannten Nachteile vermeidet. Insbesondere ist es eine Aufgabe, einen taktilen Sensor anzugeben, der besonders flexibel und biegsam ist und verschiedene Geometrien ermöglicht. Gleichzeitig soll der neue Sensor einfach, robust und kostengünstig herstellbar sein.

Gemäß einem Aspekt der vorliegenden Erfindung wird diese Aufgabe gelöst durch einen mehrschichtigen, taktilen Sensor mit einer ersten Schicht, die eine erste Elektrode umfasst, einer zweiten Schicht, die eine zweite Elektrode umfasst, und einer Zwischenschicht aus druckempfindlichem Material, welche zwischen der ersten und der zweiten Schicht angeordnet ist und die erste Elektrode von der zweiten Elektrode beabstandet, sowie mit einem Befestigungsmittel zum Fixieren der ersten und zweiten Elektrode in Bezug zueinander, wobei zumindest die erste Elektrode aus elektrisch leitfähigem Garn gebildet ist und sich entlang einer definierten Längsrichtung erstreckt, und wobei das Befestigungsmittel zumindest eine erste Naht umfasst, die sich entlang der definierten Längsrichtung der ersten Elektrode erstreckt und mindestens einen Faden aufweist, der vielfach wiederholt durch das druckempfindliche Material geführt ist, um die erste Elektrode in einer definierten Position zu fixieren.

Gemäß einem weiteren Aspekt der vorliegenden Erfindung wird diese Aufgabe gelöst durch ein Verfahren zum Herstellen eines mehrschichtigen, taktilen Sensors mit den Schritten:
- Bereitstellen einer ersten Elektrode, die eine erste Schicht bildet, und einer zweiten Elektrode, die eine zweite Schicht bildet,
- Bereitstellen einer Zwischenschicht aus druckempfindlichem Material, welche zwischen der ersten und der zweiten Schicht angeordnet ist und die erste Elektrode von der zweiten Elektrode beabstandet,
- Fixieren der ersten und der zweiten Elektrode in Bezug zueinander mit einem Befestigungsmittel,
wobei zumindest die erste Elektrode aus elektrisch leitfähigem Garn gebildet ist und sich entlang einer definierten Längsrichtung erstreckt, und wobei das Befestigungsmittel zumindest eine erste Naht aufweist, die sich in Längsrichtung erstreckt und mindestens einen Faden umfasst, der vielfach wiederholt durch das druckempfindliche Material geführt ist, um die erste Elektrode in einer definierten Position zu fixieren.

Es ist somit eine Idee der vorliegenden Erfindung, einen taktilen Sensor mit einer sich in einer Längsrichtung erstreckenden Elektrode bereitzustellen, bei dem die Elektrode individuell mit einem Befestigungsmittel fixiert ist. Das Befestigungsmittel ist dabei eine Naht mit einem Faden, der ähnlich wie die Elektrode selbst ausgebildet ist, sodass die Flexibilität des Sensors insgesamt durch das Befestigungsmittel nicht wesentlich beeinträchtigt wird. Der Sensor ist somit biegsamer als Sensoren, bei denen die Schichten miteinander laminiert sind oder die anderweitig umhäust werden müssen, um die Schichten bzw. die Elektroden zu fixieren.

Zudem werden die Elektroden optimal zueinander ausgerichtet und fixiert, indem sich das Befestigungsmittel in dieselbe Richtung erstreckt wie die Elektrode und diese somit vorzugsweise über die gesamte Länge sicher fixiert. Der Sensor als Ganzes kann somit verbogen oder verdreht werden, ohne in der Funktion eingeschränkt zu werden. Damit kann der Sensor auch an unebenen Konturen, wie bspw. an einem Roboterarm, eng anliegend befestigt werden.

Die individuelle Fixierung hat darüber hinaus den Vorteil, dass besondere Geometrien taktiler Sensoren möglich sind. So ermöglicht die individuelle Fixierung beispielsweise einen bandförmigen Sensor, der relativ lang, schmal und dünn dimensioniert ist und sich wie ein Klebeband aufrollen und applizieren lässt. Ebenso ist durch den Wegfall einer starren Umhäusung oder Laminierung eine Platzierung auf sphärischen oder zylinderförmigen Oberflächen einfach möglich.

Schließlich lässt sich das erfindungsgemäße Befestigungsmittel in Form einer Naht besonders leicht und präzise maschinell und somit kostengünstig herstellen. Die Herstellung des neuen Sensors wird somit nicht wesentlich erschwert. Sensoren mit Geometrien, die von einer in der Fläche ausgedehnten, ebenen Form abweichen, können so besonders einfach und kostengünstig hergestellt werden. Gleichzeitig ermöglicht die Naht, dass die Elektrode besonders robust an der Zwischenschicht gehalten wird. Die oben genannte Aufgabe ist somit vollständig gelöst.

In einer bevorzugten Ausgestaltung weist die erste Naht eine Vielzahl von Ein- und Austrittsöffnungen auf, die in einem definierten Abstand zueinander angeordnet sind und parallel in einem definierten Abstand zum leitfähigen Garn verlaufen. Die erste Naht ist somit parallel zu der ersten Elektrode angeordnet, um diese gleichmäßig an der Zwischenschicht zu fixieren. Die Elektrode kann so besonders präzise fixiert und ausgerichtet werden.

In einer weiteren Ausgestaltung ist die erste Schicht ein erstes textiles Flächengebilde, in welches die erste Elektrode eingenäht oder eingewoben ist, und der Faden der ersten Naht ist vielfach wiederholt durch das druckempfindliche Material und das erste textile Flächengebilde geführt. In dieser Ausgestaltung ist die erste Elektrode somit Teil eines ersten textilen Flächengebildes, welches die erste Schicht bildet. Dies hat den Vorteil, dass auch eine dünne Elektrode, die im Spezialfall auch nur einen einzelnen leifähigen Faden umfasst, einfach verarbeitet werden kann. Die Naht des Befestigungsmittels verbindet dabei das erste textile Flächengebilde mit der Zwischenschicht und fixiert so die erste Elektrode nur indirekt. In dieser Ausgestaltung können besonders dünne Elektroden für einen Sensor verwendet werden, die sich als Teil eines größeren Flächengebildes einfach bearbeiten lassen und sich gleichwohl mit dem erfindungsgemäßen Befestigungsmittel präzise und gleichmäßig fixieren lassen.

In einer weiteren Ausgestaltung ist die zweite Schicht ein zweites textiles Flächengebilde, in welches die zweite Elektrode eingenäht oder eingewoben ist, und der Faden der ersten Naht ist vielfach wiederholt durch das druckempfindliche Material, das erste textile Flächengebilde und das zweite textile Flächengebilde geführt. In dieser Ausgestaltung ist somit auch die zweite Schicht ein textiles Flächengebilde, in welchem die zweite Elektrode angeordnet ist. Die erste und die zweite Schicht können somit je ein Flächengebilde sein, die sich leicht verarbeiten lassen. So lässt sich der Sensor besonders leicht und damit kostengünstig herstellen. Gleichzeitig ermöglicht diese Ausgestaltung, dass auch die zweite Elektrode besonders schmal ausgestaltet sein kann und sich in Bezug zur ersten Elektrode präzise fixieren lässt.

In einer bevorzugten Ausgestaltung sind das erste textile Flächengebilde und das zweite textile Flächengebilde Abschnitte ein und desselben textilen Flächengebildes, die an einer Seitenkante der Zwischenschicht übereinander gefaltet sind und so die erste und die zweite Schicht des Sensors bilden. Das erste und das zweite textile Flächengebilde sind somit Teil eines gemeinsamen Flächengebildes und können so in einem Stück gefertigt werden. Vorzugsweise beinhaltet das gemeinsame textile Flächengebilde eine erste längliche Elektrode und eine zweite längliche Elektrode, die durch Falten um das druckempfindliche Material übereinander gelegt werden, um einen länglichen Sensor mit zwei zueinander parallelen, durch das druckempfindliche Material beabstandete Elektroden zu bilden. Auf diese Weise lässt sich ein bandförmiger Sensor besonders leicht und kostengünstig realisieren.

In einer besonders bevorzugten Ausgestaltung verläuft dabei die erste Naht parallel zu der ersten Seitenkante und die erste und die zweite Elektrode sind zwischen der ersten Naht und der Seitenkante angeordnet. In dieser bevorzugten Weiterbildung bildet das gemeinsame textile Flächengebilde somit eine gewebte Tasche, auf deren Vorderseite die erste Elektrode angeordnet ist und auf deren Rückseite die zweite Elektrode angeordnet ist. Die Tasche enthält einen Abschnitt des druckempfindlichen Materials, welches die Vorder- und Rückseite der Tasche voneinander beabstandet. Die erste Naht verschließt die Tasche und fixiert weiterhin, vorzugsweise beidseitig, die Zwischenschicht mit dem gemeinsamen textilen Flächengebilde. Mittels einer solchen gewebten Tasche lassen sich streifenartige Sensoren besonders leicht in wenigen Arbeitsschritten und mit nur wenigen Grundkomponenten erstellen.

In einer weiteren Ausgestaltung weist das Befestigungsmittel eine zweite Naht auf, welche parallel zu der ersten Naht so angeordnet ist, dass die erste Elektrode zwischen der ersten und zweiten Naht angeordnet ist. In dieser Ausgestaltung sind somit die erste und vorzugsweise die zweite Elektrode zwischen einer ersten und einer zweiten Naht angeordnet. Die Elektroden können so besonders präzise zueinander ausgerichtet und fixiert werden.

In einer weiteren Ausgestaltung überlappt der Faden der ersten Naht wiederholt das leitfähige Garn der ersten Elektrode, vorzugsweise über die gesamte Länge der ersten Elektrode, um diese an der Zwischenschicht zu fixieren. Indem der Faden der ersten Naht das leitfähige Garn der ersten Elektrode wiederholt überlappt, wird diese gegen die Zwischenschicht gepresst und somit besonders gut an dieser fixiert. Diese Ausgestaltung ermöglicht es, einen taktilen Sensor bereitzustellen, dessen erste Schicht ausschließlich aus einer einzelnen Elektrode gebildet sein kann, wobei in einem Spezialfall die Elektrode aus einem einzelnen Faden des leitfähigen Garns besteht. Auf diese Weise lässt sich ein besonders schmaler und flexibler Sensor realisieren.

In einer weiteren Ausgestaltung ist die erste Naht eine erste Zickzacknaht, deren zumindest einer Faden ein erstes Zickzackmuster mit kurzen Strecken definiert, die in spitzen Winkeln aneinandergereiht sind, sodass deren Enden zwei parallele Linien oder Bögen beschreiben, zwischen denen die erste Elektrode parallel angeordnet ist. Durch eine Zickzacknaht lässt sich die Elektrode besonders leicht und präzise an der Zwischenschicht fixieren. Gleichzeitig lassen sich Zickzacknähte besonders leicht maschinell erstellen, sodass die Fixierung besonders leicht herstellbar ist.

In einer weiteren Ausgestaltung weist das Befestigungsmittel eine weitere Naht mit mindestens einem weiteren Faden auf, der wiederholt unterhalb des elektrisch leitfähigen Garns durchgeführt ist, um die erste Elektrode von der Zwischenschicht zu beabstanden. In dieser Ausgestaltung wird die erste Elektrode somit durch eine weitere Naht von der Zwischenschicht abgestützt. Die weitere Naht dient somit als Abstandshalter zwischen der ersten Elektrode und dem druckempfindlichen Material. Indem der Abstand zwischen den einzelnen Stützstellen, also den Stellen, an denen die weitere Naht die Elektrode kreuzt, variiert wird, ist die Sensitivität des Sensors einstellbar. Je enger die Stützstellen beieinander liegen, umso höher muss die Druckbelastung ausfallen, um den Sensor zu betätigen. Sind die Stützstellen hingegen weiter auseinander, reicht bereits ein geringerer Druck aus, um den gleichen Effekt zu erzielen.

In einer bevorzugten Ausgestaltung kreuzt der Faden der ersten Naht die erste Elektrode in einem ersten definierten Intervall und der Faden der weiteren Naht kreuzt die erste Elektrode in einem zweiten definierten Intervall, wobei der erste und der zweite definierte Intervall verschieden sind. In dieser bevorzugten Ausgestaltung kann nicht nur die Sensitivität des Sensors über Abstandshalter eingestellt werden, sondern auch die Anpresskraft der ersten Naht variiert werden. Die Ausgestaltung ermöglicht es somit, allein durch die Wahl und Ausgestaltung des Befestigungsmittels den Sensor variabel einzustellen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel des neuen Sensors in einer perspektivischen Darstellung,
- Fig. 2: ein zweites Ausführungsbeispiel eines neuen Sensors in einer Querschnittsdarstellung,
- Fig. 3: ein drittes Ausführungsbeispiel eines neuen Sensors in einer Querschnittsdarstellung,
- Fig. 4: ein viertes Ausführungsbeispiel eines neuen Sensors in einer Querschnittsdarstellung sowie in einer Draufsicht,
- Fig. 5: ein fünftes Ausführungsbeispiel des neuen Sensors in einer Querschnittsdarstellung sowie in einer Draufsicht,
- Fig. 6: ein Ausführungsbeispiel für ein Gehäuse für einen neuen Sensor in einer perspektivischen Darstellung,
- Fig. 7: das Ausführungsbeispiel gem. Fig. 6 in einer Querschnittsdarstellung, und
- Fig. 8: einen exemplarischen Anwendungsfall des neuen Sensors.

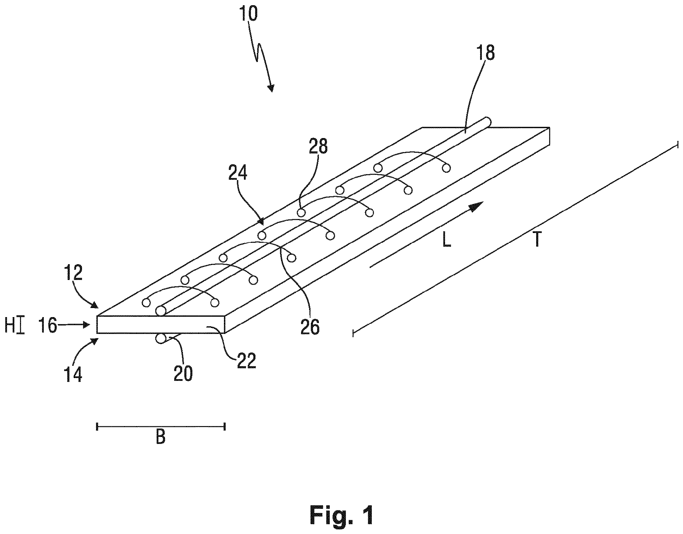

Fig. 1 zeigt ein erstes Ausführungsbeispiel des neuen Sensors in einer perspektivischen Darstellung. Der neue Sensor ist hier in seiner Gesamtheit mit der Bezugsziffer 10 bezeichnet. Der Sensor 10 ist mehrschichtig und umfasst mindestens eine erste Schicht 12, eine zweite Schicht 14 sowie eine Zwischenschicht 16, welche zwischen der ersten und zweiten Schicht angeordnet ist. Die erste Schicht 12 umfasst eine erste Elektrode 18 und die zweite Schicht 14 umfasst eine zweite Elektrode 20.

Die erste und die zweite Elektrode 18, 20 sind in diesem Ausführungsbeispiel aus elektrisch leitfähigem Garn gebildet. Insbesondere sind die erste und die zweite Elektrode 18, 20 in diesem Ausführungsbeispiel je ein Faden eines elektrisch leitfähigen Garns und entsprechend flexibel ausgestaltet. Ein elektrisch leitfähiges Garn ist im Allgemeinen ein linienförmiges Textilgebilde, welches zu Geweben, Gestricken, Gewirken und Stickereien verarbeitet werden kann und insbesondere auch zum Nähen verwendet werden kann. Gegenüber einem normalen Garn ist ein leitfähiges Garn eingerichtet, elektrischen Strom zu führen. Dies kann dadurch erreicht werden, dass das Garn aus leitfähigen Fasern gesponnen wird, beispielsweise unter der Verwendung von Edelstahlfasern. Alternativ kann aber auch ein herkömmlicher nicht leitender Faden leitfähig gemacht werden, indem dieser mit leitfähigem Material beschichtet wird. Beispielsweise kann ein einfacher Nylonfaden mit Silber beschichtet werden, um einen leitfähigen Faden zu erhalten. Die verschiedenen leitfähigen Garnarten haben unterschiedliche Vor- und Nachteile hinsichtlich Festigkeit und Leitfähigkeit, sind aber in Bezug auf den neuen Sensor gleichermaßen verwendbar. Entscheidend ist, dass der Faden durchweg leitfähig ist und gleichzeitig seine textilartigen Eigenschaften, insbesondere seine Flexibilität und Biegsamkeit beibehält.

Im Ausführungsbeispiel gemäß Fig. 1 sind als erste Elektrode und als zweite Elektrode 18, 20 jeweils nur ein einzelner elektrischer Faden gezeigt. Hierbei handelt es sich um einen Spezialfall. In anderen Ausführungsbeispielen können die erste und zweite Elektrode 18, 20 auch aus einer Vielzahl von elektrisch leitfähigen Fäden gebildet sein. Der in Fig. 1 aufgezeigte Spezialfall mit einer Elektrode aus nur einem einzelnen Faden aus leitfähigem Garn wird im Folgenden als "Ein-Garn-Elektrode" bezeichnet.

Ferner sind im Ausführungsbeispiel gemäß Fig. 1 die erste und die zweite Elektrode 18, 20 gleich ausgestaltet. Es versteht sich, dass dies nicht zwangsläufig der Fall sein muss und dass in anderen Ausführungsbeispielen eine Elektrode in der ersten Schicht anders ausgestaltet sein kann als eine Elektrode in der zweiten Schicht.

Eine Ausgestaltung der Elektroden 18, 20 als Garn bedingt, dass sich die Elektroden 18, 20 im Wesentlichen in einer Längsrichtung L erstrecken. Dies bedeutet jedoch nicht, dass die Elektroden gradlinig ausgebildet sein müssen. Vielmehr können die Elektroden auch in einem Bogen verlaufen, je nachdem welche Geometrie der entsprechende Anwendungsfall erfordert.

Die erste und die zweite Elektrode 18, 20 verlaufen in diesem Ausführungsbeispiel parallel zueinander und sind durch die Zwischenschicht 16 voneinander beabstandet. Die Zwischenschicht 16 ist aus druckempfindlichem Material 22 ausgebildet. Beispielsweise kann die Zwischenschicht komprimierbare Elemente aufweisen, die bei einem Druck quer zu den Elektroden 18, 20 auseinandergedrückt werden, sodass die erste und die zweite Elektrode 18, 20 an der Stelle der Druckbelastung in Berührung kommen. Alternativ kann für die Zwischenschicht auch ein Material verwendet werden, welches unter Druck eine elektrische Eigenschaft zwischen der ersten und der zweiten Elektrode 18, 20 verändert. Insbesondere kann ein Material verwendet werden, welches seinen elektrischen Widerstand unter Druck verändert. Eine Zwischenschicht 16 aus solch einem Material kann vorzugsweise, wie hier dargestellt, vollflächig ausgestaltet sein.

Unabhängig von der Ausgestaltung der Zwischenschicht 16 im Einzelnen kann bei einer Druckbelastung, die senkrecht auf die Zwischenschicht 16 wirkt, eine veränderte elektrisehe Eigenschaft zwischen der ersten und der zweiten Elektrode 18, 20 durch eine Auswerteschaltung (hier nicht dargestellt) festgestellt werden. Der in Fig. 1 dargestellte Spezialfall eines Sensors mit einer "Ein-Garn-Elektrode" beruht somit auf dem gleichen Wirkprinzip wie eine Schaltmatte mit in der Fläche ausgedehnten Elektroden.

Darüber hinaus weist der neue Sensor ein Befestigungsmittel 24 auf, welches zumindest die erste Elektrode an der Zwischenschicht 16 in einer definierten Position fixiert. Das Befestigungsmittel 24 weist mindestens eine erste Naht 26 auf, die sich in der von der ersten Elektrode definierten Längsrichtung L erstreckt. Das heißt, die Naht 26 weist Ein- und Austrittsöffnungen 28 auf, die parallel entlang der ersten Elektrode 18 verlaufen. Durch die Ein- und Austrittsöffnungen 28 ist ein Faden vielfach wiederholt durch das druckempfindliche Material 22 geführt, um die erste Elektrode 18 an der Zwischenschicht 16 zu halten. In dem hier dargestellten Ausführungsbeispiel ist hierzu der Faden wiederholt über die erste Elektrode geführt, wodurch diese an die Zwischenschicht 16 gepresst wird.

Es versteht sich, dass in bevorzugten Ausführungsbeispielen, wenn die zweite Elektrode 20 in ähnlicher Weise ausgebildet ist wie die erste Elektrode, diese ebenfalls über eine Naht an der Zwischenschicht 16 befestigt sein kann. Besonders bevorzugt ist dabei auch die zweite Elektrode 20 über die erste Naht 26 fixiert, sodass für die erste und für die zweite Elektrode 18, 20 nur ein Befestigungsmittel 24 benötigt wird. Der Faden der ersten Naht 26 weist dabei ähnliche Eigenschaften - abgesehen von der Leitfähigkeit - auf wie das elektrisch leitfähige Garn der ersten oder zweiten Elektrode 18, 20, sodass der Sensor insgesamt die Flexibilität der Elektrode beibehält. Insgesamt ist somit durch das Befestigungsmittel 24 die Flexibilität des Sensors nicht wesentlich eingeschränkt. Gleichzeitig ist jedoch die erste Elektrode 18 durch das Befestigungsmittel 24 so fixiert, dass auch beim Verdrehen oder Biegen des Sensors 10 die erste Elektrode 18 in ihrer vorgegebenen Position gehalten wird.

Bevorzugt findet der erfindungsgemäße Sensor Anwendung als streifenförmiger Sensor zur Absicherung von Quetsch- und Scherkanten, wie beispielsweise an industriellen Produktionsanlagen, automatischen Türen, Toren oder Fenstern in der Gebäudetechnik oder Fahrzeugtüren im öffentlichen Personenverkehr. Ein bevorzugter Sensor erstreckt sich somit im Wesentlichen in einer Längsrichtung L und eine Höhe H und eine Breite B des Sensors sind im Verhältnis zu seiner Tiefe T gering. Insbesondere ist die Tiefe T in bevorzugten Ausführungsbeispielen mindestens ein Zehnfaches der Breite B. Ferner lässt sich der Sensor in einem weiteren bevorzugten Ausführungsbeispiel aufrollen und applizieren wie ein Klebeband. Ebenso ermöglicht die erfindungsgemäße Ausgestaltung, dass der Sensor als laufendes Stückgut gefertigt ist, das erst beim Endanwender in seine abschließende Form geschnitten wird. Die durch die individuelle Fixierung der Elektroden erreichte Robustheit geht dabei nicht verloren, da diese nur von der Ausgestaltung der Elektrode abhängig ist und nicht von der Geometrie des Sensors.

Es versteht sich, dass die vorliegende Erfindung nicht auf die vorstehend genannten streifenartigen Sensoren beschränkt ist, sondern eine individuelle Fixierung auch bei anders ausgestalteten taktilen Sensoren mit anderen Geometrien Anwendung finden kann.

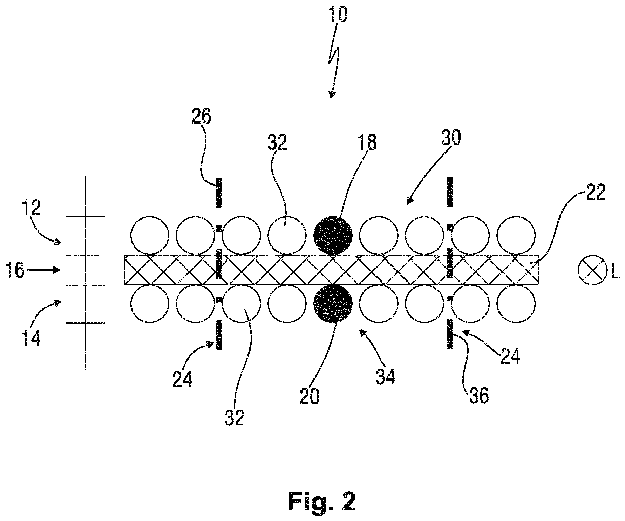

Mit Bezug zu der Fig. 2 wird im Folgenden ein zweites Ausführungsbeispiel eines erfindungsgemäßen Sensors näher erläutert. Fig. 2 zeigt den neuen Sensor in einer Querschnittsdarstellung. Gleiche Bezugszeichen bezeichnen dabei gleiche Teile wie im Ausführungsbeispiel gemäß Fig. 1.

Im Gegensatz zum Ausführungsbeispiel gemäß Fig. 1 sind die erste und die zweite Schicht nicht ausschließlich aus einer Elektrode aus leitfähigem Garn gebildet. Vielmehr sind die leitfähigen Elektroden 18, 20 je Teil eines textilen Flächengebildes. Ein erstes textiles Flächengebilde 30 bildet die erste Schicht 12 und umfasst neben der ersten Elektrode 18 aus elektrisch leitfähigem Garn weitere nicht-leitfähige Fäden 32. Die nicht leitfähigen Fäden 32 und die erste Elektrode 18 erstrecken sich in einer Längsrichtung L in die Bildebene hinein und sind mit zur Längsrichtung quer verlaufenden Fäden verwoben, um ein textiles Werkstück zu bilden. Bei dem ersten Flächengebilde handelt es sich somit um einen textilen Stoff, der aus leitfähigen und nicht leitfähigen Fäden gebildet ist.

Die zweite Elektrode 20 ist in diesem Ausführungsbeispiel wie die erste Elektrode 18 ebenfalls mit nicht-leitfähigen Fäden zu einem zweiten Flächengebilde 34 verwoben. Das erste und das zweite Flächengebilde 30, 34 sind auf gegenüberliegenden Seiten auf die Zwischenschicht 16 aufgelegt. Die Bereiche, in denen sich die erste und die zweite Elektrode 18, 20 überlappen, bilden dabei die aktiven Bereiche, in denen eine Kompression des druckempfindlichen Materials 22 der Zwischenschicht 16 durch die erste und die zweite Elektrode 18, 20 registriert werden kann. Im hier gezeigten Ausführungsbeispiel sind die erste Elektrode 18 und die zweite Elektrode 20 über ihre gesamte Länge parallel zueinander angeordnet, sodass der aktive Bereich durch die Dimensionierung der ersten und zweiten Elektrode 18, 20 definiert ist. Es versteht sich, dass eine andere Anordnung der Elektroden denkbar ist. Insbesondere können in anderen Ausführungsbeispielen auch weitere Elektroden vorgesehen sein, die matrixartig angeordnet sind, um druckempfindliche Zellen zu definieren, die individuell abgefragt werden können.

Im Ausführungsbeispiel gemäß Fig. 2 ist neben einer ersten Naht 26 eine zweite Naht 36 vorgesehen, die zusammen das Befestigungsmittel 24 bilden. Der Faden der ersten Naht 26 und der Faden der zweiten Naht 36 sind in diesem Ausführungsbeispiel wiederholt vielfach sowohl durch die erste Schicht 12, die zweite Schicht 14 und die Zwischenschicht 16 geführt. Die Nähte 26, 36 verlaufen dabei entlang der Längsrichtung L parallel zu der ersten und der zweiten Elektrode 18, 20. Weder die erste Naht 26 noch die zweite Naht 36 sind in diesem Ausführungsbeispiel unmittelbar mit der ersten bzw. mit der zweiten Elektrode 18, 20 verbunden, um diese zu fixieren. Vielmehr sind die erste Naht 26 und die zweite Naht 36 mit dem ersten Flächengebilde 30 und dem zweiten Flächengebilde 34 verbunden, um diese an der Zwischenschicht 16 zu fixieren. Da sowohl die erste Elektrode 18 als auch die zweite Elektrode 20 jeweils in das erste bzw. das zweite textile Flächengebilde 30, 34 eingewoben sind, fixieren die erste Naht 26 und die zweite Naht 36 des Befestigungsmittels 24 darüber hinaus auch die Elektroden in einer definierten Position zueinander. Die Elektroden sind in diesem Ausführungsbeispiel somit nur indirekt über die Nähte 26, 36 fixiert.

Die Biegsamkeit des Sensors 10 ist in erster Linie abhängig von der Biegsamkeit der einzelnen Schichten 12, 14, 16 und wird durch die erste und zweite Naht 26, 36 im Wesentlichen nicht beeinflusst. Gleichwohl bleiben die Elektroden 18, 20 auch beim Verbiegen oder Verdrehen des Sensors in ihrer definierten Position. Da die Nähte hier in diesem Ausführungsbeispiel nicht mit den Elektroden in unmittelbaren Kontakt stehen, können die Nähte hier ebenfalls aus leitfähigem Garn sein und ggf. zu Kontaktierung der Elektroden oder anderer Komponenten des Sensors beitragen.

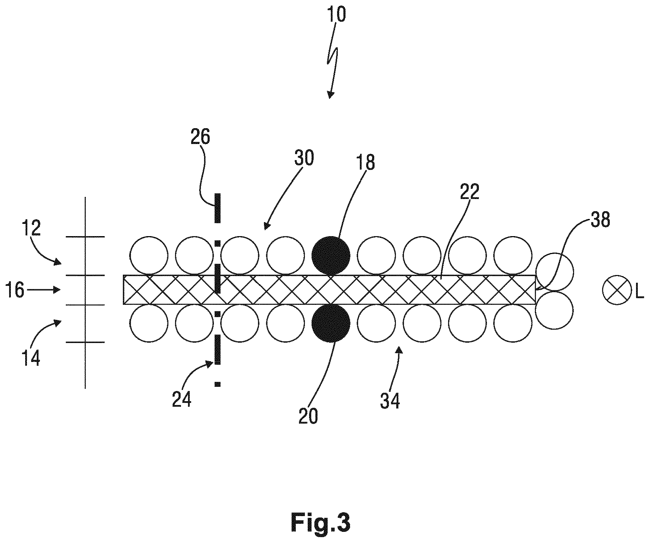

Mit Bezug auf die Fig. 3 wird im Folgenden eine weitere Abwandlung des in Fig. 2 beschriebenen Ausführungsbeispiels näher erläutert. Fig. 3 zeigt dabei den neuen Sensors ebenfalls in einer Querschnittsdarstellung, wobei auch hier gleiche Bezugszeichen gleiche Teile bezeichnen.

Im Ausführungsbeispiel gemäß der Fig. 3 sind die erste Elektrode 18 und die zweite Elektrode 20 ebenfalls Teile eines textilen Flächengebildes. Im Gegensatz zu dem zuvor beschriebenen Beispiel sind das erste Flächengebilde 30 und das zweite Flächengebilde 34 jedoch Abschnitte eines gemeinsamen Flächengebildes, welches um eine Seitenkante 38 des druckempfindlichen Materials 22 der Zwischenschicht 16 gefaltet ist. Die erste und die zweite Schicht 12, 14 werden in diesem Ausführungsbeispiel somit dadurch gebildet, dass ein einstückiges, textiles Werkstück übereinander gefaltet wird. Wie in einem Briefumschlag ist die Zwischenschicht 16 aus dem druckempfindlichen Material 22 dabei in das gefaltete Flächengebilde eingelegt. Das Flächengebilde wird vorzugsweise so um die Seitenkante 38 gefaltet, dass die erste Elektrode 18 und die zweite Elektrode 20 übereinander zum Liegen kommen. Der Bereich, in dem die erste Elektrode 18 und die zweite Elektrode 20 überlappen, ist wiederum der aktive Bereich des Sensors 10. Im hier dargestellten Ausführungsbeispiel überlappen sich die erste Elektrode 18 und die zweite Elektrode 20 über ihre gesamte Länge in Längsrichtung L.

Ferner ist im Gegensatz zum vorstehend genannten Ausführungsbeispiel gemäß Fig. 3 als Befestigungsmittel 24 eine einzelne Naht 26 vorgesehen. Die einzelne Naht 26 verläuft in diesem Ausführungsbeispiel parallel zu der ersten und zweiten Elektrode 18, 20 und der Seitenkante 38. Bildlich gesprochen verschließt die Naht 26 somit den Umschlag, in dem das druckempfindliche Material 22 der Schicht 16 wie ein Brief eingelegt ist. Die Naht 26 fixiert dabei sowohl die erste Schicht 12, die zweite Schicht 14 als auch die Zwischenschicht 16 miteinander, indem die Naht 26 sowohl durch das erste Flächengebilde 30, das zweite Flächengebilde 34 und die Zwischenschicht 16 geführt ist.

Ein bandförmiger Sensor gemäß dem Ausführungsbeispiel der Fig. 3 lässt sich in dieser Weise besonders einfach und kostengünstig realisieren, da nur eine Naht gesetzt werden muss und neben der Naht nur ein einstückiges Werkstück mit eingewobenen Elektroden und eine Zwischenschicht benötigt wird.

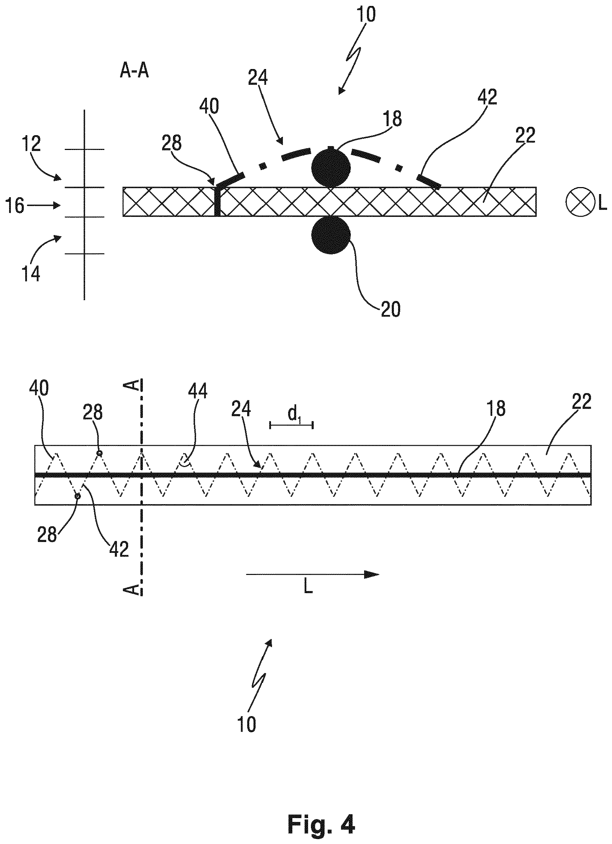

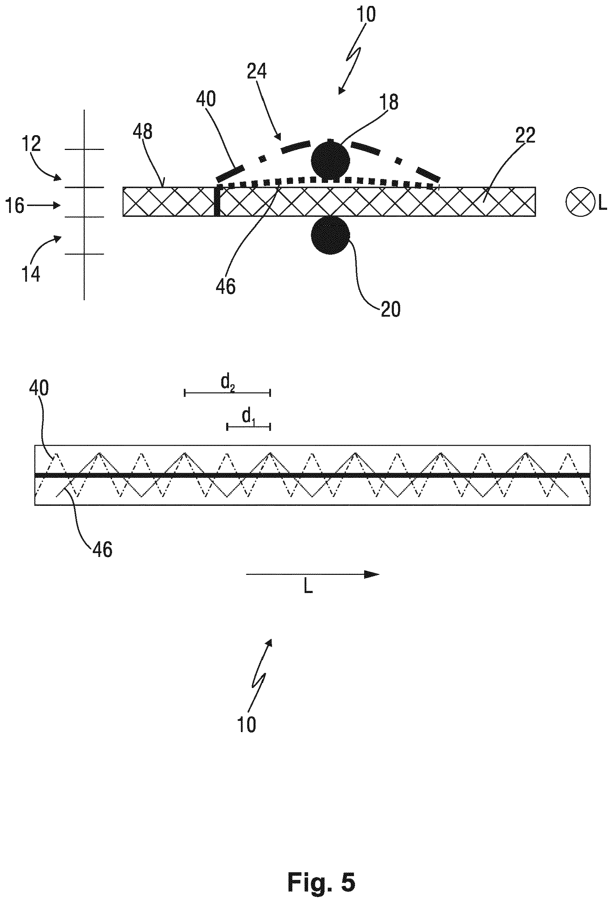

Fig. 4 und Fig. 5 zeigen zwei weitere Ausführungsbeispiele des neuen Sensors. Fig. 4 zeigt den neuen Sensors dabei sowohl in einer Draufsicht im unteren Abschnitt und in einer Querschnittsdarstellung in der oberen Hälfte der Darstellung. Gleiche Bezugszeichen bezeichnen auch hier wieder gleiche Teile. Der Sensor 10 umfasst hier wie im Ausführungsbeispiel gemäß Fig. 1 jeweils eine einzelne Elektrode in einer ersten Schicht 12 und in einer zweiten Schicht 14. Es handelt sich folglich um den Spezialfall einer "Ein-Garn-Elektrode" sowohl in der ersten Schicht 12 als auch in der zweiten Schicht 14. Es versteht sich jedoch, dass die Fixierung der Elektroden, wie im Folgenden näher erläutert, nicht auf diese Ausgestaltung beschränkt ist, sondern auch bei anders ausgestalteten Elektroden Anwendung finden kann. Insbesondere kann eine Elektrode auch aus mehreren Fäden zusammengesetzt sein, die nebeneinander liegen, verdrillt oder verwoben sind.

Wie in den vorherigen Ausführungsbeispielen sind die erste Elektrode 18 und die zweite Elektrode 20 durch eine Zwischenschicht 16 aus druckempfindlichem Material 22 voneinander beabstandet. Die erste und die zweite Elektrode 18, 20 erstrecken sich entlang einer Längsrichtung L und bestimmen dabei im Wesentlichen die Dimension des Sensors 10. Bei dem Sensor 10 handelt es sich somit ebenfalls um einen bandförmigen Sensor, der relativ lang, schmal und dünn ist und dadurch beispielsweise auf schmalen Kanten von Türen oder Fenstern angebracht werden kann. Der aktive Bereich des Sensors entspricht dem Bereich, in dem sich die erste Elektrode 18 und die zweite Elektrode 20 überlappen. Eine Kompression des druckempfindlichen Materials 22 in der näheren Umgebung zu der ersten Elektrode und der zweiten Elektrode 18, 20 kann von dem Sensor 10 erfasst werden, indem eine Änderung einer elektrischen Eigenschaft zwischen der ersten Elektrode 18 und der zweiten Elektrode 20 bedingt durch die Kompression registriert wird.

Die erste Elektrode 18 wird mittels eines Befestigungsmittels 24 an der Zwischenschicht 16 gehalten. Das Befestigungsmittel 24 umfasst hier eine Zickzacknaht 40 mit einem Faden, der ein erstes Zickzackmuster definiert. Der Faden ist durch das druckempfindliche Material 22 geführt, tritt aus einer Ein- und Austrittsöffnung 28 aus dem druckempfindlichen Material 22 heraus und wird über die erste Elektrode 18 zu einer weiteren Ein- und Austrittsöffnung 28 geführt, durch welche es wieder in das druckempfindliche Material 22 eintritt. Die kurzen Strecken 42, die der Faden zwischen den einzelnen Ein- und Austrittsöffnungen 28 definiert, sind in gleichen Winkeln 44 aneinandergereiht, sodass deren Enden, also die Ein- und Austrittsöffnungen 28, zwei parallele Linien oder Bögen beschreiben, zwischen denen die erste Elektrode 18 angeordnet ist. Vorzugsweise sind die Ein- und Austrittsöffnungen 28 auf der jeweiligen Seite der ersten Elektrode 18 im gleichen Abstand zu dieser angeordnet, sodass die Elektrode gleichmäßig durch die kurzen Strecken 42 an die Zwischenschicht 16 gepresst wird. Mit anderen Worten kreuzt die Zickzacknaht 40 in Längsrichtung L in einem definierten Intervall d₁ die erste Elektrode 18. Eine Zickzacknaht 40 lässt sich besonders einfach maschinell herstellen. Gleichzeitig wird die erste Elektrode 18 durch die Zickzacknaht 40 optimal in einer vorgegebenen Position fixiert.

Es versteht sich, dass neben einem Zickzackmuster auch ein anderes Nahtmuster verwendet werden kann, bei dem die erste Elektrode 18 an die Zwischenschicht 16 gedrückt und in einer definierten Position fixiert wird. Das Zickzackmuster ist bevorzugt, da es sich besonders leicht erstellen lässt. Darüber hinaus kann in einem anderen Ausführungsbeispiel auch die zweite Elektrode 20 auf gleiche Weise mit einer entsprechenden Naht an der Zwischenschicht 16 fixiert werden.

Fig. 5 zeigt eine Abwandlung des Ausführungsbeispiels des neuen Sensors gemäß Fig. 4. Auch hier bezeichnen gleiche Bezugszeichen wieder gleiche Teile. Fig. 5 zeigt den Sensor 10 sowohl in einer Draufsicht (unten) als auch in einer Schnittdarstellung (oben).

Wie im vorherigen Ausführungsbeispiel sind die erste und die zweite Schicht 12, 14 jeweils aus einer Elektrode 18, 20 gebildet und durch eine Zwischenschicht 16 aus druckempfindlichem Material 22 voneinander beabstandet. Die erste Elektrode 18 ist auch hier durch eine erste Zickzacknaht 40 an der Zwischenschicht 16 gehalten.

Zusätzlich zum vorherigen Ausführungsbeispiel umfasst das Befestigungsmittel 24 neben der ersten Zickzacknaht 40 noch eine zweite Zickzacknaht 46. Wie die erste Zickzacknaht 40 erstreckt sich auch die zweite Zickzacknaht 46 in der durch die erste Elektrode 18 definierten Längsrichtung L. Im Unterschied zur ersten Zickzacknaht 40 ist die zweite Zickzacknaht 46 jedoch unterhalb der ersten Elektrode 18 zwischen dieser und der Zwischenschicht 16 angeordnet. Mit anderen Worten ist die zweite Zickzacknaht 46 eine Naht, die unmittelbar auf der Oberfläche der Zwischenschicht 16 aufliegt. Dabei kreuzt die zweite Zickzacknaht 46 die erste Elektrode 18 in einem definierten Intervall d₂. An den Kreuzungspunkten liegt die erste Elektrode 18 somit nicht unmittelbar auf der ersten Zwischenschicht 16 auf, sondern wird hier durch die zweite Zickzacknaht 46 gestützt.

Die zweite Zickzacknaht 46 fungiert in diesem Ausführungsbeispiel folglich als Abstandshalter, über den die Sensitivität des Sensors 10 einstellbar ist. Indem die Anzahl an Stützstellen erhöht wird, kann der Sensor 10 so angepasst werden, dass ein größerer Druck auf die Elektrode 18 und die Zwischenschicht 16 ausgeübt werden muss, um eine Veränderung der elektrischen Eigenschaften zwischen der ersten Elektrode 18 und der zweiten Elektrode 20 zu bewirken. Insbesondere kann durch die zweite Zickzacknaht 46 eine hohe Anpresskraft, die durch die erste Zickzacknaht 40 auf die erste Elektrode 18 ausgeübt wird, kompensiert und ausgeglichen werden.

Insgesamt kann eine Sensitivität des Sensors durch Variieren der Abstände der Stützstellen und/oder der Abstände der Überlappung der ersten bzw. der zweiten Zickzacknaht 40, 46 vorteilhaft eingestellt werden. Das Befestigungsmittel 24 dient in diesem Ausführungsbeispiel somit nicht nur als individuelle Fixierung einer einzelnen Elektrode, sondern auch als Einstellmittel zur Kontrolle der Sensitivität des Sensors. Es ist dabei denkbar, dass in anderen Ausführungsbeispielen ein Intervall der Stützstellen (d₂) bzw. ein Intervall der Überlappungen (d₁) über die Längsrichtung L hin variieren, um an unterschiedlichen Stellen des Sensors eine unterschiedliche Sensitivität bereitzustellen. So können alleine über das Befestigungsmittel 24 unterschiedliche Bereiche des Sensors mit unterschiedlicher Sensitivität bereitgestellt werden. Es versteht sich, dass auch in diesem Ausführungsbeispiel eine andere Naht als eine Zickzacknaht zur Befestigung oder als Abstandshalter verwendet werden kann.

Während in den vorliegenden Ausführungsbeispielen das Befestigungsmittel 24 jeweils für die erste Elektrode 18 beschrieben worden ist, ist es ebenso denkbar, dasselbe Befestigungsmittel 24 auch für die zweite Elektrode 20 zu verwenden. Ebenso ist es denkbar, dass die verschiedenen Befestigungsmittel, wie sie in den einzelnen Ausführungsbeispielen gezeigt worden sind, auch miteinander kombiniert werden können. Bspw. kann eine Zickzacknaht auch dann verwendet werden, wenn die erste und/oder die zweite Schicht ein textiles Flächengebilde sind. Darüber hinaus ist es denkbar, dass für die erste Schicht 12 ein erstes Befestigungsmittel 24 verwendet wird und für die zweite Schicht 14 ein anderes Befestigungsmittel. Insoweit lassen sich die einzelnen Befestigungsmittel für jede Schicht beliebig variieren. Ebenso versteht es sich, dass die gezeigten Ausführungsbeispiele im Besonderen für den Spezialfall von einer "Ein-Garn-Elektrode" geeignet sind, jedoch auch für Elektroden, die aus mehreren Fäden eines leitfähigen Garns ausgebildet sind, verwendet werden können.

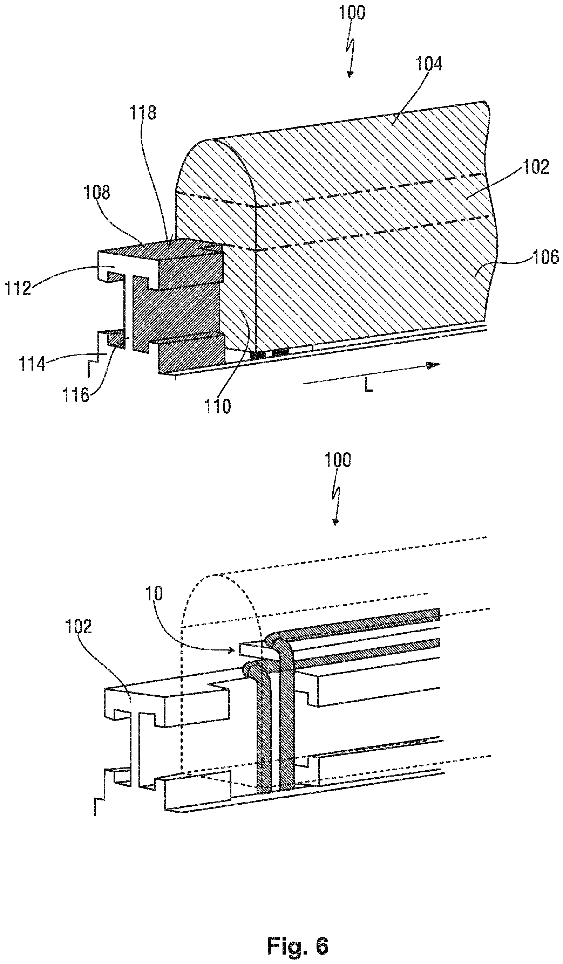

Mit Bezug auf Fig. 6 wird im Folgenden ein bevorzugtes Ausführungsbeispiel für ein Gehäuse für einen vorstehend offenbarten Sensor erläutert. Das Gehäuse ist insbesondere für die Befestigung und zum Schutz eines streifenförmigen Sensors ausgebildet. Fig. 6 zeigt in zwei Abbildungen den neuen Sensor in einer perspektivischen Darstellung. Die obere Abbildung zeigt das Gehäuse in einer geschlossenen Form, während die untere Abbildung einen Blick ins Innere des Gehäuses ermöglicht, wobei die äußeren Konturen hier durch gestrichelte Linien dargestellt sind. In beiden Abbildungen bezeichnen gleiche Bezugszeichen gleiche Teile.

Das Gehäuse, das hier in seiner Gesamtheit mit der Bezugsziffer 100 bezeichnet ist, unterteilt sich in einen Grundkörper 102, einen Kompressionskörper 104 und einen Verbindungsabschnitt 106. Da das Gehäuse einstückig aus elastischem Material gefertigt ist, gehen der Kompressionskörper 104, der Grundkörper 102 und der Verbindungsabschnitt 106 nahtlos ineinander über. Innerhalb des Sensors 100, genauer gesagt im Grundkörper 102, ist eine streifenartige Sensoreinheit 10 angeordnet. Bei der streifenartigen Sensoreinheit 10 handelt es sich vorzugsweise um ein Ausführungsbeispiel eines Sensors, wie es zuvor mit Bezug zu den Fig. 1 bis 5 beschrieben worden ist. Insbesondere handelt es sich somit um einen Sensor, der wenigstens eine Elektrode aus leitfähigem Garn aufweist. Stellvertretend für solch einen Sensor ist hier der Spezialfall mit einer "Ein-Garn-Elektrode" angedeutet. Wie der zu beherbergende Sensor erstreckt sich das Gehäuse 100 im Wesentlichen entlang einer Längsrichtung L.

Das Gehäuse 100 ist zusammen mit der Sensoreinheit 10 auf einem Träger 108 montiert, der nicht Teil des Gehäuses ist, aber mit diesem zusammenwirkt, um den Sensor 10 entsprechend zu lagern und gegen äußere Einflüsse abzuschirmen. Vorzugsweise ist das Gehäuse 100 dazu ausgebildet, eine formschlüssige Verbindung zum Träger 108 herzustellen. Hierzu weist das Gehäuse Verbindungselemente 110 im Verbindungsabschnitt 106 auf, die so geformt sind, dass sie zu einer formschlüssigen Verbindung in den Träger 108 eingreifen. Bei dem Träger 108 handelt es sich somit bevorzugt um ein längliches Profil, an dessen äußere Form die Verbindungselemente 110 angepasst sind.

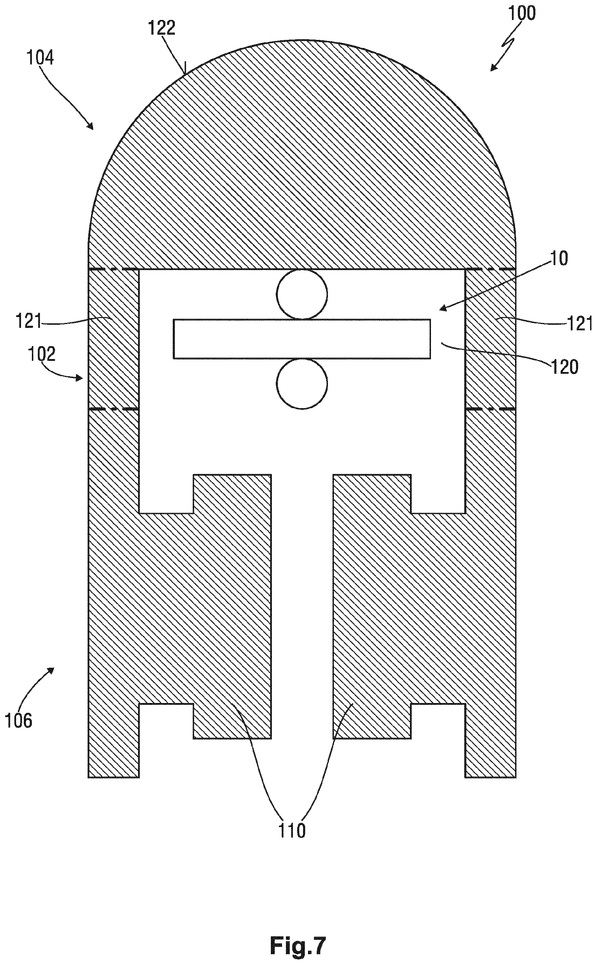

Im hier dargestellten Ausführungsbeispiel handelt es sich bei dem Träger 108 um ein Doppel-T-Profil mit einem oberen Flansch 112 und einem unteren Flansch 114 sowie einem die beiden Flansche verbindenden Mittelsteg 116. Der obere Flansch 112 hat eine ebene Oberfläche 118, die als Auflagefläche für die Sensoreinheit 10 dient. Die Oberfläche 118 bildet somit eine stabile und gleichmäßige Basis für die Sensoreinheit 10. Im Übrigen umschließt das Gehäuse 100 die Auflagefläche 118 samt Sensoreinheit 10. Die Sensoreinheit 10 ist somit dicht im Gehäuse 100 verschlossen. Über den Kompressionskörper 104 werden Stöße gleichmäßig auf die Sensoreinheit 10 übertragen. Die spezielle Form des Grundkörpers 102, des Kompressionskörpers 104 und des Verbindungsabschnitts 106 und deren Funktionen werden im Folgenden mit Bezug auf die Fig. 7 näher erläutert.

Fig. 7 zeigt das Ausführungsbeispiel des Gehäuses gemäß der Fig. 6 in einem Querschnitt. Gleiche Bezugszeichen bezeichnen hier wieder gleiche Teile. Durch die gestrichelten Linien ist hier die Unterteilung des Gehäuses 100 in den Kompressionskörper 104, den Grundkörper 102 sowie den Verbindungsabschnitt 106 angedeutet. Der Verbindungsabschnitt 106 weist, wie zuvor beschrieben, in diesem Ausführungsbeispiel zwei Verbindungselemente 110 auf, über die eine formschlüssige Verbindung zu einem Träger (hier nicht dargestellt) ermöglicht werden kann. Die Verbindungselemente 110 sind so eingerichtet, dass sie auseinandergespreizt werden können, um auf einem Träger montiert zu werden.

Der Grundkörper 102 weist eine Aufnahme 120 auf, in der die Sensoreinheit 10 einlegbar ist. Die Aufnahme 120 ist nach oben hin durch den Kompressionskörper 104 verschlossen sowie an der Seite durch Seitenteile 121, die der Höhe der Sensoreinheit 10 entsprechen. Im unteren Abschnitt, also im Übergang zum Verbindungsabschnitt 106, ist die Aufnahme 120 vorzugweise offen, sodass die Sensoreinheit 10 durch den Verbindungsabschnitt 106 in den Grundkörper 102 eingelegt werden kann. Wie bei der Montage auf einen Träger werden hierzu die Verbindungselemente 110 auseinandergespreizt und die Sensoreinheit 10 in die Aufnahme 120 eingelegt. Auf diese Weise ist eine werkzeuglose Montage der Sensoreinheit 10 möglich.

Im montierten Zustand, also wenn das Gehäuse 100 auf einen Träger aufgesetzt ist, dichten die Verbindungselemente 110 die Aufnahme 120 gegen Wasser und Verschmutzung ab, sodass der Sensor vor äußeren Einflüssen geschützt ist. Vorzugsweise lässt sich so ein Sensor mit einer Schutzart IP67 erzeugen. In Bereichen, in denen die elektrischen Kontakte zur Sensoreinheit 10 geführt werden, was vorzugsweise an einer Kopfseite des Sensors erfolgt, kann die Dichtheit mit einem passenden Klemmteil (hier nicht dargestellt) oder durch nachträgliches Vergießen gewährleistet werden.

Der Kompressionsbereich 104 ist dazu ausgebildet, Kräfte, die auf die Oberfläche 122 des Kompressionskörpers 104 wirken, auf die streifenförmige Sensoreinheit 10 zu übertragen. Gleichzeitig ist der Kompressionskörper 104 dazu ausgebildet, Stöße auf den Sensor 10 entsprechend zu dämpfen, sodass die Sensoreinheit 10 ohne weitere Umhäusung in die Aufnahme 120 eingelegt werden kann. Der Kompressionskörper ist im Verhältnis zum übrigen Gehäuse verhältnismäßig dick und weich ausgestaltet und weist vorzugsweise eine gekrümmte Oberfläche 122 auf. Die gekrümmte Oberfläche 122 hat den Vorteil, dass eine darauf einwirkende Kraft gleichmäßig auf den Sensor 10 übertragen wird. Die Sensitivität des Sensors 10 wird dadurch vorteilhaft erhöht.

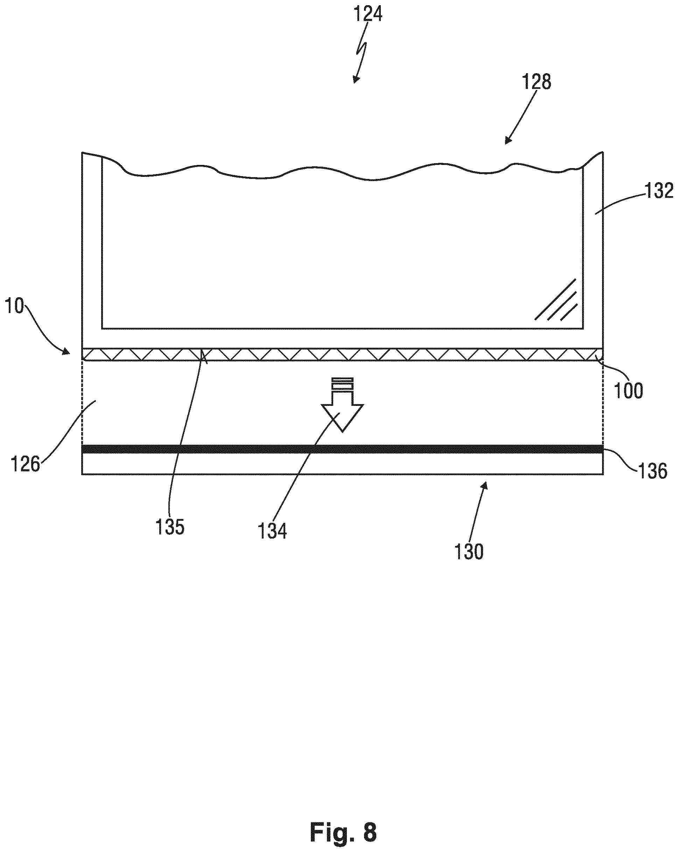

Das Material, aus dem das Gehäuse 110 einstückig gefertigt ist, ist vorzugsweise geschäumtes Polyurethan mit einer verdichteten Oberfläche. Die Maße des Gehäuses 100 bestimmen sich im Wesentlichen durch die verwendete Sensoreinheit 10. Vorzugsweise ist eine Länge des Gehäuses, also hier die Ausdehnung in die Bildebene hinein, mindestens ein zweistelliges Vielfaches seiner Breite bzw. seiner Höhe. Die Höhe des Gehäuses bestimmt sich maßgeblich durch den Kompressionskörper 104 und den Verbindungsabschnitt 106, während der Grundkörper 102 so schmal wie die Sensoreinheit 10 ausgebildet sein kann und somit im Verhältnis nicht wesentlich zur Höhe beiträgt. Besonders bevorzugt ist eine Breite B des Sensors kleiner als 1 cm und vorzugsweise kleiner 0,7 cm und insbesondere 0,5 cm. Damit eignet sich der Sensor besonders gut, um als Einklemmschutz für automatische Türen, Tore und Fenster verwendet zu werden oder zum Bestimmen, ob solche dicht verschlossen sind. Ein konkretes Anwendungsbeispiel wird im Folgenden mit Bezug auf die Fig. 8 erläutert.

Fig. 8 zeigt ein automatisch schließendes Fenster 124, an welchem ein erfindungsgemäßer Sensor 10 angeordnet ist. Das Fenster 124 ist dazu ausgebildet, eine Öffnung 126 zu verschließen und hat einen ersten Teil 128 und einen zweiten Teil 130. Der erste Teil 128 ist hier eine Fensterscheibe, die sich in einem Rahmen 132 befindet, der entlang der durch den Pfeil 134 dargestellten Bewegungsrichtung beweglich ist. Der zweite Teil 130 bildet den Anschlag, an dem eine Seitenkante 135 des Rahmens 132 bündig anliegt, wenn das Fenster 124 die Öffnung 126 verschließt.

An der besagten Seitenkante 135 am Rahmen 132 ist hier über die gesamte Länge ein Ausführungsbeispiel des neuen Sensors angeordnet. Der Sensor 10 ist hier dazu ausgebildet, zu detektieren, ob die Öffnung 126 vollständig verschlossen ist. Der zweite Teil 130, der hier als Anschlag ausgebildet ist und feststehend ist, kann in anderen Ausführungsbeispielen ebenfalls beweglich ausgebildet sein. Vorzugsweise weist der zweite Teil 130 eine Dichtlippe 136 auf, die im Querschnitt ähnlich ausgebildet ist, wie das Gehäuse 100 des neuen Sensors 10. Auf diese Weise fungieren die Dichtlippe 136 und das Gehäuse 100 zusätzlich als Dichtung.

Der neue Sensor ermöglicht auf einfache Weise basierend auf einem taktilen Prinzip die Dichtheit einer Tür, eines Tors oder eines Fensters zu überprüfen. Insbesondere wenn die Sensoreinheit 10 dazu eingerichtet ist, neben einer Belastung selbst auch deren Stärke bzw. deren Verteilung über den Sensor zu bestimmen, kann der Sensor vorteilhaft gleichzeitig für verschiedene Anwendungsfälle, wie bspw. Dichtheitsprüfung und Einklemmschutz eingesetzt werden.

## Patentansprüche

1. Mehrschichtiger, taktiler Sensor (10) mit einer ersten Schicht (12), die eine erste Elektrode umfasst, einer zweiten Schicht (14), die eine zweite Elektrode (20) umfasst, und einer Zwischenschicht (16) aus druckempfindlichem Material (22), welche zwischen der ersten und der zweiten Schicht (12, 14) angeordnet ist und die erste Elektrode (18) von der zweiten Elektrode (20) beabstandet, sowie einem Befestigungsmittel (24) zum Fixieren der ersten und zweiten Elektrode (18, 20) in Bezug zueinander,
wobei zumindest die erste Elektrode (18) aus elektrisch leitfähigem Garn gebildet ist und sich entlang einer definierten Längsrichtung (L) erstreckt,
**dadurch gekennzeichnet, dass**
das Befestigungsmittel (24) zumindest eine erste Naht (26) umfasst, die sich entlang der Längsrichtung (L) erstreckt und mindestens einen Faden aufweist, der vielfach wiederholt durch das druckempfindliche Material (22) geführt ist, um die erste Elektrode (18) in einer definierten Position zu fixieren.

2. Mehrschichtiger, taktiler Sensor nach Anspruch 1, wobei die erste Naht (26) eine Vielzahl von Ein- und Austrittsöffnungen (28) aufweist, die parallel und in einem definierten Abstand zum leitfähigen Garn der ersten Elektrode (18) angeordnet sind.

3. Mehrschichtiger, taktiler Sensor nach einem der Ansprüche 1 oder 2, wobei die erste Schicht (12) ein erstes textiles Flächengebilde (30) ist, in welches die erste Elektrode (18) eingenäht oder eingewoben ist und der Faden der ersten Naht (26) vielfach wiederholt durch das druckempfindliche Material (22) und das erste textile Flächengebilde (30) geführt ist.

4. Mehrschichtiger, taktiler Sensor nach Anspruch 3, wobei die zweite Schicht (14) ein zweites textiles Flächengebilde (34) ist, in welches die zweite Elektrode (20) eingenäht oder eingewoben ist, und wobei der Faden der ersten Naht (26) vielfach wiederholt durch das druckempfindliche Material (22), das erste textile Flächengebilde (30) und das zweite textile Flächengebilde (34) geführt ist.

5. Mehrschichtiger, taktiler Sensor nach Anspruch 4, wobei das erste textile Flächengebilde (30) und das zweite textile Flächengebilde (34) Abschnitte eines gemeinsamen textilen Flächengebildes sind, welches an einer Seitenkante (38) der Zwischenschicht (16) übereinander gefaltet ist und so die erste und die zweite Schicht (12, 14) des Sensors (10) bildet.

6. Mehrschichtiger, taktiler Sensor nach Anspruch 5, wobei die erste Naht (26) parallel zu der ersten Seitenkante (38) verläuft und die erste und die zweite Elektrode (18, 20) zwischen der ersten Naht (26) und der Seitenkante (38) angeordnet sind.

7. Mehrschichtiger, taktiler Sensor nach einem der Ansprüche 1 bis 6, wobei das Befestigungsmittel (24) eine zweite Naht (36) aufweist, welche parallel zu der ersten Naht (26) so angeordnet ist, dass die erste Elektrode (18) zwischen der ersten und der zweiten Naht (26, 36) angeordnet ist.

8. Mehrschichtiger, taktiler Sensor nach einem der Ansprüche 1 bis 7, wobei der Faden der ersten Naht (26) das leitfähige Garn der ersten Elektrode (18), vorzugsweise über die gesamte Länge der ersten Elektrode (18), wiederholt überlappt und die erste Elektrode (18) an der Zwischenschicht (16) fixiert.

9. Mehrschichtiger, taktiler Sensor nach einem der Ansprüche 1 bis 8, wobei die erste Naht (26) eine erste Zickzacknaht (40) ist, deren zumindest einer Faden ein erstes Zickzackmuster mit kurzen Strecken (42) definiert, die in spitzen Winkeln (44) aneinandergereiht sind, sodass deren Enden zwei parallele Linien oder Bögen beschreiben, zwischen denen die erste Elektrode (18) parallel angeordnet ist.

10. Mehrschichtiger, taktiler Sensor nach einem der Ansprüche 1 bis 9, wobei das Befestigungsmittel (24) eine weitere Naht mit mindestens einem weiteren Faden aufweist, der vorzugsweise über die gesamte Länge der ersten Elektrode (18) wiederholt unterhalb des elektrisch leifähigen Garns durchgeführt ist, um die erste Elektrode (18) von der Zwischenschicht (16) zu beabstanden.

11. Mehrschichtiger, taktiler Sensor nach Anspruch 10, wobei der Faden der ersten Naht (26) die erste Elektrode (18) in einem ersten definierten Intervall (d₁) kreuzt und der Faden der weiteren Naht (46) die erste Elektrode (18) in einem zweiten definierten Intervall (d₂) kreuzt, wobei der erste und der zweite definierte Intervall (d₁, d₂) verschieden sind.

12. Verfahren zum Herstellen eines mehrschichtigen, taktilen Sensors mit den Schritten:
- Bereitstellen einer ersten Elektrode (18), die eine erste Schicht (12) bildet, und einer zweiten Elektrode (20), die eine zweite Schicht (14) bildet,
- Bereitstellen einer Zwischenschicht (16) aus druckempfindlichem Material (22), welche zwischen der ersten und der zweiten Schicht (12, 14) angeordnet ist und die erste Elektrode (18) von der zweiten Elektrode (20) beabstandet,
- Fixieren der ersten und der zweiten Elektrode (18, 20) in Bezug zueinander mit einem Befestigungsmittel (24),
**dadurch gekennzeichnet, dass** zumindest die erste Elektrode (18) aus elektrisch leitfähigem Garn gebildet ist und sich entlang einer definierten Längsrichtung (L) erstreckt, und wobei das Befestigungsmittel (24) zumindest eine erste Naht (26) aufweist, die sich in Längsrichtung (L) erstreckt und mindestens einen Faden aufweist, der vielfach wiederholt durch das druckempfindliche Material (22) geführt wird, um die erste Elektrode (18) in einer definierten Position zu fixieren.

## Claims

1. Multilayer tactile sensor (10) with a first layer (12) comprising a first electrode, a second layer (14) comprising a second electrode (20) and an intermediate layer (16) of pressure-sensitive material (22) that is disposed between the first and the second layer (12, 14) and spaces apart the first electrode (18) from the second electrode (20), and a fastening means (24) for fixing the first and second electrode (18, 20) in relation to each other,
wherein at least the first electrode (18) is made of electrically conductive yarn and extends along a defined longitudinal direction (L), and
**characterized in that** the fastening means (24) comprises at least a first seam (26) that extends along the longitudinal direction (L) and comprises at least one thread, which is being fed repeatedly multiple times through the pressure-sensitive material (22) in order to fix the first electrode (18) in a defined position.

2. Multilayer tactile sensor according to Claim 1, wherein the first seam (26) comprises a number of entry and exit openings (28) that are disposed in parallel and at a defined distance from the conductive yarn of the first electrode (18).

3. Multilayer tactile sensor according to any one of Claims 1 or 2, wherein the first layer (12) is a first textile sheet (30) into which the first electrode (18) is sewn or woven and the thread of the first seam (26) is fed repeatedly multiple times through the pressure-sensitive material (22) and the first textile sheet (30).

4. Multilayer tactile sensor according to Claim 3, wherein the second layer (14) is a second textile sheet (34) into which the second electrode (20) is sewn or woven, and wherein the thread of the first seam (26) is fed repeatedly multiple times through the pressure-sensitive material (22), the first textile sheet (30) and the second textile sheet (34).

5. Multilayer tactile sensor according to Claim 4, wherein the first textile sheet (30) and the second textile sheet (34) are sections of a common textile sheet which is folded along a lateral edge (38) of the intermediate layer (16) as to form the first and second layer (12, 14) of the sensor (10).

6. Multilayer tactile sensor according to Claim 5, wherein the first seam (26) runs parallel to the first lateral edge (38) and the first and second electrode (18, 20) are disposed between the first seam (26) and the lateral edge (38).

7. Multilayer tactile sensor according to any one of Claims 1 to 6, wherein the fastening means (24) comprises a second seam (36) that is disposed parallel to the first seam (26) so that the first electrode (18) is disposed between the first seam and the second seam (26, 36).

8. Multilayer tactile sensor according to any one of Claims 1 to 7, wherein the thread of the first seam (26) repeatedly overlaps the conductive yarn of the first electrode (18), preferably over the entire length of the first electrode (18), and holds the first electrode (18) on the intermediate layer (16).

9. Multilayer tactile sensor according to any one of Claims 1 to 8, wherein the first seam (26) is a first zigzag seam (40) with at least one thread defining a first zigzag pattern having short sections (42) that are concatenated at acute angles (44) so that the ends thereof describe two parallel lines or curves, between which the first electrode (18) is disposed in parallel.

10. Multilayer tactile sensor according to any one of Claims 1 to 9, wherein the fastening means (24) comprises a further seam with at least one further thread that is repeatedly fed through below the electrically conductive yarn, preferably over the entire length of the first electrode (18), in order to space the first electrode (18) apart from the intermediate layer (16).

11. Multilayer tactile sensor according to Claim 10, wherein the thread of the first seam (26) crosses the first electrode (18) at a first defined interval (d1) and the thread of the further seam (46) crosses the first electrode (18) at a second defined interval (d2), wherein the first and the second defined interval (d1, d2) are different.

12. Method for manufacturing a multilayer tactile sensor with the steps:
providing a first electrode (18) that forms a first layer (12) and a second electrode (20) that forms a second layer (14),
providing an intermediate layer (16) of pressure-sensitive material (22) that is disposed between the first and second layers (12, 14) and that spaces the first electrode (18) apart from the second electrode (20),
fixing the first and second electrode (18, 20) relative to each other with a fastening means (24),
**characterized in that** at least the first electrode (18) is made of electrically conductive yarn and extends along a defined longitudinal direction (L), and wherein the fastening means (24) comprises at least a first seam (26) that extends in the longitudinal direction (L) and comprises at least one thread, which is being fed repeatedly multiple times through the pressure-sensitive material (22) in order to fix the first electrode (18) in a defined position.

## Revendications

1. Capteur tactile multicouche (10) avec une première couche (12), qui comprend une première électrode, avec une deuxième couche (14), qui comprend une deuxième électrode (20), et avec une couche intermédiaire (16) en matériau sensible à la pression (22), qui est disposée entre la première et la deuxième couches (12, 14) et qui espace la première électrode (18) de la deuxième électrode (20), ainsi qu'avec un moyen de fixation (24) pour fixer la première et la deuxième électrodes (18, 20) l'une par rapport à l'autre, dans lequel au moins la première électrode (18) est formée de fil électriquement conducteur et s'étend le long d'une direction longitudinale définie (L),
**caractérisé en ce que** le moyen de fixation (24) comprend au moins une première couture (26), qui s'étend le long de la direction longitudinale (L) et présente au moins un fil, qui est conduit de façon répétée plusieurs fois à travers le matériau sensible à la pression (22), afin de fixer la première électrode (18) dans une position définie.

2. Capteur tactile multicouche selon la revendication 1, dans lequel la première couture (26) présente une multiplicité d'ouvertures d'entrée et de sortie (28), qui sont disposées parallèlement et à une distance définie du fil conducteur de la première électrode (18).

3. Capteur tactile multicouche selon une des revendications 1 ou 2, dans lequel la première couche (12) est un premier produit plat textile (30), dans lequel la première électrode (18) est cousue ou tissée et le fil de la première couture (26) est conduit de façon répétée plusieurs fois à travers le matériau sensible à la pression (22) et à travers le premier produit plat textile (30).

4. Capteur tactile multicouche selon la revendication 3, dans lequel la deuxième couche (14) est un deuxième produit plat textile (34), dans lequel la deuxième électrode (20) est cousue ou tissée, et dans lequel le fil de la première couture (26) est conduit de façon répétée plusieurs fois à travers le matériau sensible à la pression (22), le premier produit plat textile (30) et le deuxième produit plat textile (34).

5. Capteur tactile multicouche selon la revendication 4, dans lequel le premier produit plat textile (30) et le deuxième produit plat textile (34) sont des parties d'un produit plat textile commun, qui est replié sur lui-même à un bord latéral (38) de la couche intermédiaire (16) et forme ainsi la première et la deuxième couches (12, 14) du capteur (10).

6. Capteur tactile multicouche selon la revendication 5, dans lequel la première couture (26) s'étend parallèlement au premier bord latéral (38) et la première et la deuxième électrodes (18, 20) sont disposées entre la première couture (26) et le bord latéral (38).

7. Capteur tactile multicouche selon l'une quelconque des revendications 1 à 6, dans lequel le moyen de fixation (24) présente une deuxième couture (36), qui est disposée parallèlement à la première couture (26), de telle manière que la première électrode (18) soit disposée entre la première et la deuxième coutures (26, 36).

8. Capteur tactile multicouche selon l'une quelconque des revendications 1 à 7, dans lequel le fil de la première couture (26) chevauche de façon répétée le fil conducteur de la première électrode (18), de préférence sur toute la longueur de la première électrode (18), et fixe la première électrode (18) à la couche intermédiaire (16).

9. Capteur tactile multicouche selon l'une quelconque des revendications 1 à 8, dans lequel la première couture (26) est une première couture en zigzag (40), dont au moins un fil définit un premier motif en zigzag avec des brins courts (42), qui s'enchaînent avec des angles aigus (44), de telle manière que leurs extrémités décrivent deux lignes ou arcs parallèles, entre lesquels/lesquelles la première électrode (18) est disposée parallèlement.

10. Capteur tactile multicouche selon l'une quelconque des revendications 1 à 9, dans lequel le moyen de fixation (24) présente une autre couture avec au moins un autre fil, qui est conduit de préférence sur toute la longueur de la première électrode (18) de façon répétée en dessous du fil électriquement conducteur, afin d'espacer la première électrode (18) de la couche intermédiaire (16).

11. Capteur tactile multicouche selon la revendication 10, dans lequel le fil de la première couture (26) croise la première électrode (18) à un premier intervalle défini (d₁) et le fil de l'autre couture (46) croise la première électrode (18) à un deuxième intervalle défini (d₂), dans lequel le premier intervalle (d₁) et le deuxième intervalle (d₂) sont différents.

12. Procédé de fabrication d'un capteur tactile multicouche, présentant les étapes suivantes:
- préparer une première électrode (18), qui forme une première couche (12), et une deuxième électrode (20), qui forme une deuxième couche (14),
- préparer une couche intermédiaire (16) en matériau sensible à la pression (22), qui est disposée entre la première et la deuxième couches (12, 14) et qui espace la première électrode (18) de la deuxième électrode (20),
- fixer la première et la deuxième électrodes (18, 20) l'une par rapport à l'autre avec un moyen de fixation (24),
**caractérisé en ce qu'**au moins la première électrode (18) est formée de fil électriquement conducteur et s'étend le long d'une direction longitudinale définie (L), et dans lequel le moyen de fixation (24) présente au moins une première couture (26), qui s'étend dans la direction longitudinale (L) et qui présente au moins un fil, que l'on conduit de façon répétée plusieurs fois à travers le matériau sensible à la pression (22), afin de fixer la première électrode (18) dans une position définie.
